# EUROPÄISCHE PATENTSCHRIFT

(11) **EP 1 859 326 B1**
(45) Veröffentlichungstag und Bekanntmachung des Hinweises auf die Patenterteilung: **04.06.2014**
(21) Anmeldenummer: 06723454.2
(22) Anmeldetag: 15.03.2006
(51) Int. Cl.: G05B 13/02

(54) **VERFAHREN ZUR STEUERUNG EINES ANSTEUERBAREN AGGREGATS**
METHOD FOR CONTROLLING A CONTROLLABLE UNIT
PROCEDE POUR COMMANDER UNE UNITE POUVANT ETRE COMMANDEE

(30) Priorität: 17.03.2005 DE 102005012255
(43) Veröffentlichungstag der Anmeldung: 28.11.2007
(73) Patentinhaber: ZF FRIEDRICHSHAFEN Aktiengesellschaft, 88038 Friedrichshafen (DE)
(72) Erfinder: JAUCH, Friedemann, 88069 Tettnang (DE); SCHULER, Franz-Josef, 88079 Kressbronn (DE); KIEFER, Michael, 88069 Tettnang (DE); BOSCH, Eric, 88677 Markdorf (DE)
(86) Internationale Anmeldenummer: PCT/EP2006/002386
(87) Internationale Veröffentlichungsnummer: WO 2006/097296

(56) Entgegenhaltungen:
- DE-A1- 19 814 483
- US-A- 5 895 435
- US-A- 6 154 701
- US-A1- 2001 006 923

## Beschreibung

Die Erfindung betrifft ein Verfahren zur Steuerung eines ansteuerbaren Aggregats, wie insbesondere eines Getriebes eines Kraftfahrzeugs, wobei zur Bildung wenigstens einer Bestimmungsgröße unterschiedliche oder unterschiedlich viele Beiträge von Lieferobjekten berücksichtigt werden. Weiterhin betrifft die Erfindung eine Steuereinheit zur Steuerung eines solchen Aggregats sowie ein solches Aggregat.

Ein Verfahren der eingangs genannten Art ist aus der DE 198 14 483 A1 bekannt. Die DE 198 14 483 A1 offenbart ein System zur Berücksichtigung von unterschiedlich vielen Beiträgen zur Bildung wenigstens einer Bestimmungsgröße, insbesondere zur Steuerung des Betriebs eines Kraftfahrzeugs. Dabei werden die Beiträge der Lieferobjekte einem Sammler zugeführt, mittels dem die Bestimmungsgröße abhängig von den zugeführten Beiträgen gebildet wird. Weiterhin ist ein Aufrufer-Nerwaltermittel vorgesehen, mittels welchem die Zuführung der Beiträge der Lieferobjekte zum Sammler gesteuert wird. Das Aufrufer Nenrvaltermittel entscheidet somit, von welchen Lieferobjekten Beiträge zugeführt werden und welche nicht zugeführt und somit auch nicht berücksichtigt werden.

Dies hat den Nachteil, dass nur eine begrenzte Anzahl von Beiträgen zugeführt wird und Beiträge von nicht aktiven oder nicht benötigten Lieferobjekten nicht zugeführt werden und zur Steuerung zumindest zeitweise nicht zur Verfügung stehen. Dadurch kann eine Situation entstehen, dass im Falle einer Bewertungsänderung gewisse benötigte Beiträge nicht zur Verfügung stehen, so dass eine veränderte Bewertung bei der Steuerung nicht unmittelbar angewandt werden kann, weil die dafür benötigten Beiträge der noch nicht aktiven Lieferobjekte erst noch zugeführt werden müssen.

Somit wird das Verfahren insgesamt verlangsamt und zusätzliche nötige Verfahrensschritte, wie das Aufrufen und Zuführen von Lieferobjekten und Beiträgen, müssen eingeleitet werden. US 5 895 435 beschreibt ein Verfahren zur Steuerung eines Kraftfahrzeugs.

Es ist Aufgabe der vorliegenden Erfindung, ein Verfahren zur Steuerung eines ansteuerbaren Aggregats, insbesondere eines Getriebes eines Kraftfahrzeugs, zu schaffen, das auch bei einem Bewertungswechsel schnell und zuverlässig durchgeführt werden kann. Weiterhin ist es Aufgabe der Erfindung, eine Steuereinheit zu schaffen, mittels welcher ein solches Verfahren durchführbar ist, sowie ein solches Aggregat bereitzustellen.

Diese Aufgabe wird erfindungsgemäß bei einem Verfahren gemäß den Merkmalen des Oberbegriffs des Anspruches 1, wonach zur Bildung wenigstens einer Bestimmungsgröße unterschiedliche oder unterschiedlich viele Beiträge von Lieferobjekten berücksichtigt werden und zumindest zwei unterschiedliche Lieferobjekte vorgesehen sind, mittels der jeweils ein Beitrag zur Ermittlung der Bestimmungsgröße ermittelt wird, und wobei ein Zähler vorgesehen ist, welchem die Beiträge aller Lieferobjekte zugeführt werden, dadurch gelöst, dass der Zähler jeden Beitrag mittels einer Gewichtung bewertet und einem Auswertemittel zuführt und dieses Auswertemittel mittels der bewerteten Beiträge die Bestimmungsgröße ermittelt.

In vorteilhafter Weise werden hiermit alle Bewertungen jederzeit abgerufen, so dass bei einem Wechsel der Bewertung und der entsprechenden Gewichtung diese unmittelbar bei der Steuerung des Aggregats eingesetzt werden kann, ohne zuvor neue Beiträge aufrufen zu müssen. Es werden somit alle Lieferanten aufgerufen und durch eine entsprechende Gewichtung gewertet, wobei nicht wie im zitierten Stand der Technik ein Verwalter entscheidet, welche Bewertungen eine Freigabe erhalten und welche nicht, sondern der Zähler erkennt, welche Bewertungen aktiv sind. Mittels einer applizierbaren Tabelle kann dann der Zähler deren Betrag entsprechend gewichten.

Besonders vorteilhaft ist es, wenn die einzelnen Bewertungen untereinander priorisierbar sind. Wenn die Bewertungen per Applikation priorisiert sind, kann im Falle, dass eine höher priorisierte Bewertung aktiv wird, die momentane Bewertung verlassen und zu der aktiven und am höchsten priorisierten Bewertung gewechselt werden.

Das erfindungsgemäße Verfahren eignet sich insbesondere zur Ansteuerung eines automatischen oder automatisierten Getriebes eines Kraftfahrzeuges.

Hierbei bietet das erfindungsgemäße Verfahren insbesondere bei der Ermittlung eines Fahrertyps, welcher zur Auswahl eines Fahrmodus bzw. Fahrprogramms herangezogen wird, Vorteile. Bei einem Verfahren zur Fahrererkennung wird auf an sich bekannte Art und Weise aus bestimmten Fahrzeugparametern wie Motordrehzahl, Pedalstellung, Geschwindigkeit, Querbeschleunigung, Längsbeschleunigung usw. eine Fahraktivität berechnet, wobei die Berechnung der Fahraktivität gemäß den bekannten Verfahren in den meisten Fällen aufwendig ist, da es schwierig ist, die verschiedenen Steuerparameter, welche als Kennwerte oder Kennfelder vorliegen, der einzelnen Bewertungen abzustimmen. So müssen beim Aktivieren oder Deaktivieren einer einzelnen Bewertung die anderen Bewertungen korrigiert werden, da der neu ermittelte Fahrertyp nicht mehr dem Fahrstil entspricht.

Mit dem erfindungsgemäßen Verfahren kann eine solche Fahrertyperkennung erheblich vereinfacht werden.

Weiterhin wird die erfindungsgemäße Aufgabe bezüglich der Steuereinheit gemäß den Merkmalen des Anspruches 14 und bezüglich des Aggregats gemäß den Merkmalen des Anspruches 15 gelöst.

Weitere Vorteile und vorteilhafte Weiterbildungen der Erfindung ergeben sich aus den Patentansprüchen und dem unter Bezugnahme auf die Zeichnung prinzipmäßig beschriebenen Ausführungsbeispiel.

Es zeigt:
- Fig. 1: eine schematische Darstellung eines Diagramms zum Ablauf eines erfindungsgemäß ausgeführten Verfahrens;
- Fig. 2: eine Bewertungsmatrix zur Ausführung eines erfindungsgemäßen Verfahrens; und
- Fig. 3: eine schematische Darstellung eines Kraftfahrzeugs mit einem erfindungsgemäß ansteuerbaren Getriebe und einer hierfür ausgelegten Steuereinheit.

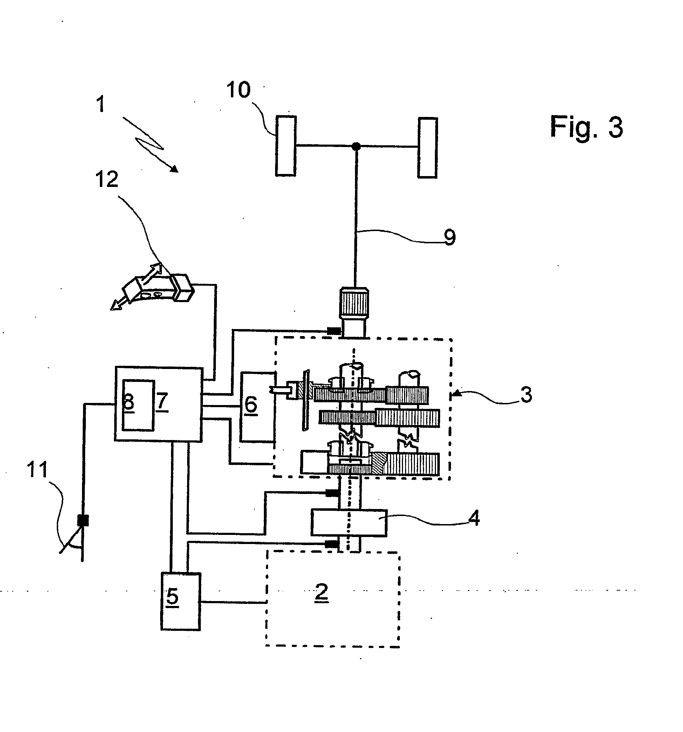

Das erfindungsgemäße Verfahren zur Ansteuerung eines Aggregates wird nachfolgend exemplarisch anhand der Ansteuerung eines Getriebes 3 eines Kraftfahrzeuges 1 erläutert, wie es in Fig. 3 näher gezeigt ist.

Bei einem automatischen Getriebe oder bei einem automatisierten Schaltgetriebe werden Schaltungen von Getriebeübersetzungen ausgelöst, wenn eine Gangschaltkennlinie überschritten wird. Die Gangschaltkennlinien sind Dabei in der Regel eine Funktion einer Fahrzeuggeschwindigkeit und der Lasthebelposition und gegebenenfalls anderer Parameter.

Ein Fahrprogramm enthält alle benötigten Gangschaltkennlinien und gegebenenfalls auch Kennlinien von Drehmomentwandler oder Kupplung für einen Fahrmodus, wie einen sportlichen Fahrmodus oder einen okönomischen Fahrmodus oder gegebenenfalls auch andere Fahrmodi, wie beispielsweise ein Winterfahrprogramm. Der Fahrer kann dann mittels eines Wahlelements direkt oder indirekt über eine Fahrertyperkennung zwischen verschiedenen Fahrmodi wählen. Auch können Schaltkennlinien oder Übersetzungswechselkennlinien für ein stufenlos einstellbares Getriebe innerhalb eines Fahrmodus aufgrund einer Fahrertyperkennung angepasst werden.

Weiterhin wird aus verschiedenen Fahrzeugparametern, welche als Beiträge von Lieferobjekten des Fahrzeugs, wie beispielsweise Motordrehzahl, Lasthebelposition, Geschwindigkeit, Querbeschleunigung und Längsbeschleunigung, dargestellt werden können, eine Fahreraktivität ermittelt und eine Fahrertyperkennung durchgeführt. Dabei können einzelne solcher Beiträge oder Lieferobjekte aktiviert oder deaktiviert werden.

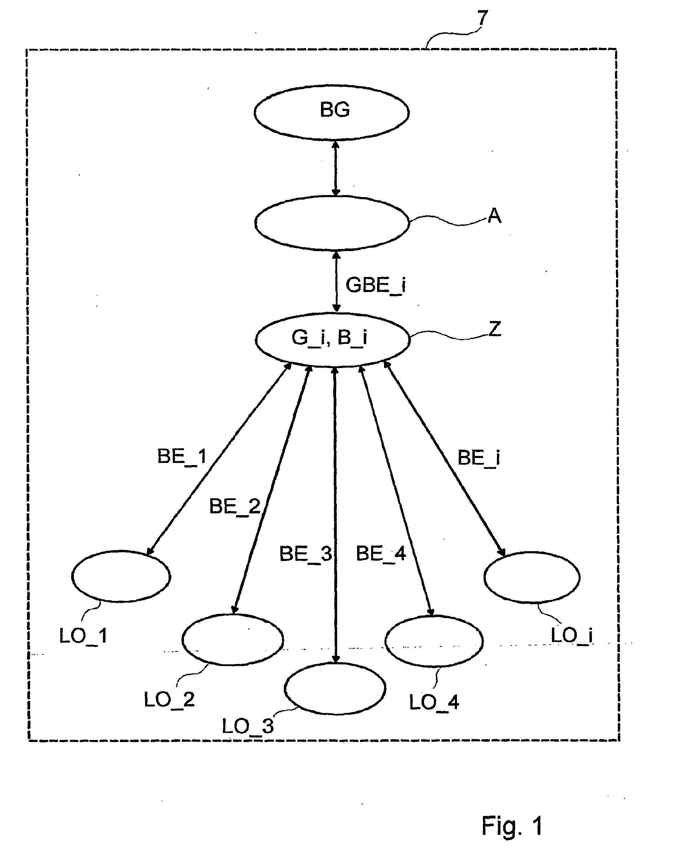

Die Figur 1 zeigt ein Diagramm zur Durchführung eines erfindungsgemäßen Verfahrens in einer Steuereinheit 7 des Getriebes 3. Hierbei sind verschiedene Lieferobjekte LO_1, LO_2, LO_3, LO_4 und LO_i vorgesehen, die jeweils Beiträge BE_i mit i = (1, 2, 3, 4, ... ) an einen Zähler Z liefern. Dazu ruft beispielsweise der Zähler Z, welcher hier einen Fahrertyp-Zähler darstellt, alle Beiträge BE_i der Lieferobjekte LO_i auf. Diese geben ihren Beitrag BE_i an den Zähler Z weiter, der diese Beiträge verarbeitet.

Vorliegend stellt ein erstes Lieferobjekt LO_1 eine Anfahr-Bewertung, ein zweites Lieferobjekt LO_2 eine Kick-Down-Bewertung, ein drittes Lieferobjekt LO_3 eine Längsbeschleunigungs-Bewertung und ein viertes Lieferobjekt LO_4 eine Querbeschleunigungs-Bewertung dar. Weiterhin können verschiedene weitere Lieferobjekte LO_i vorgesehen sein.

Die Anfahr-Bewertung von Lieferobjekt LO_1 bewertet den Anfahrvorgang beispielsweise anhand zumindest einer Größe, wie einer der Größen Lasthebelposition und/oder Lasthebelgradient und/oder weiterer Größen.

Die Kick-Down-Bewertung von Lieferobjekt LO_2 bewertet eine Kick-Down-Betätigung eines Lasthebels anhand zumindest einer Größe, wie beispielsweise einer Lasthebelposition und/oder einem Überschreiten einer vorbestimmten Lasthebelposition und/oder weiterer Größen.

Die Längsbeschleunigungs-Bewertung von Lieferobjekt LO_3 bewertet die Längsbeschleunigung des Fahrzeugs, und die Querbeschleunigungs-Bewertung von Lieferobjekt LO_4 bewertet entsprechend die Querbeschleunigung des Fahrzeugs.

Die Lieferobjekte liefern an den Zähler Z einen Beitrag BE_i. Die Beiträge BE_i können von dem Zähler Z abgerufen werden oder direkt von den Lieferobjekten ohne Abruf an den Zähler Z gesendet werden.

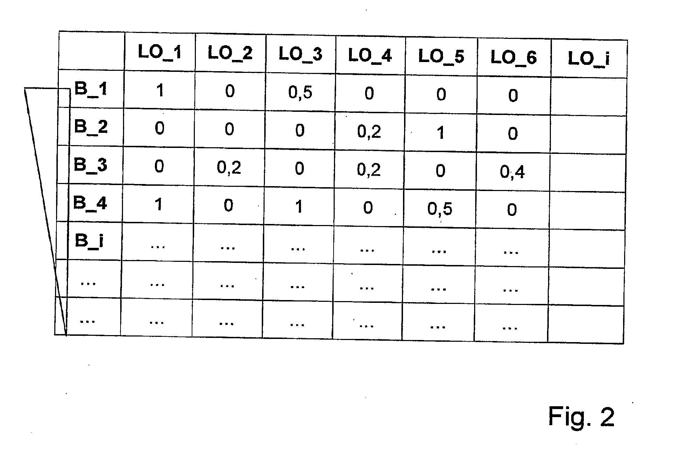

Der Zähler Z gewichtet die einzelnen Beiträge BE_i der Lieferobjekte mit einer Gewichtung G_i gemäß der am höchsten priorisierten aktiven Bewertung B_i wie im Folgenden zu Figur 2 näher beschrieben.

Mittels der Gewichtung G_1 werden anhand der Beiträge BE_i gewichtete Beiträge GBE_1 erzeugt und gegebenenfalls weiter verarbeitet, wie beispielsweise aufsummiert. Diese gewichteten Beiträge werden einem Auswertemittel A zugeführt, welches aus diesen eine Bestimmungsgröße BG bestimmt. Die Bestimmungsgröße BG ist vorliegend für die Steuerung eines automatischen oder automatisierten Getriebes als ansteuerbares Aggregat eine Fahrertyperkennung, anhand welcher eine mehr sportliche oder mehr ökonomische Steuerung des Getriebes adaptiert wird.

Das Auswertemittel A, welches hier einen Fahrertyp-Bereich darstellt, ruft das Objekt Fahrertyp-Zähler Z auf und verarbeitet den von diesem gelieferten Wert zur Bestimmungsgröße BG, wie beispielsweise zum Fahrertyp.

Die mehr sportliche Steuerung des Getriebes aufgrund eines mehr sportlichen Fahrertyps kann bewirken, dass Schaltkennlinien zu höheren Motordrehzahlen verschoben werden, so dass ein höheres Drehmoment bei höherer Motordrehzahl zur Verfügung steht. Die mehr ökonomische Steuerung des Getriebes aufgrund eines mehr ökonomischen Fahrertyps kann bewirken, dass Schaltkennlinien zu geringeren Motordrehzahlen verschoben werden, so dass ein kraftstoffverbrauchsgünstiges Fahren erlaubt wird.

Erfindungsgemäß erhält der Zähler Z die Beiträge aller Lieferobjekte und bewertet diese durch die Gewichtung G_i, so dass je nach durchgeführter und priorisierter Bewertung gegebenenfalls zumindest einzelne erhaltene und zur Verfügung stehende Beiträge nicht in die Bestimmung der Bestimmungsgröße BG eingehen. Dabei können bei veränderter Priorisierung von Bewertungen und gegebenenfalls deaktivierten Bewertungen andere Gewichtungsfaktoren andere Beiträge anderer Lieferobjekte zur Bestimmung der Bestimmungsgröße BG verwendbar sein. Die Beiträge können von dem Zähler prioritätsgesteuert aufgerufen werden.

Anschließend werden die Beiträge entsprechend einer aktiven Bewertung gewichtet und entsprechend ihrer Gewichtung gemäß Figur 2 bei der Bestimmung der Bestimmungsgröße BG berücksichtigt. Ist eine aktive Bewertung berücksichtigt, kann die Abarbeitung anderer Bewertungen abgebrochen werden, und es kann mit der Bestimmung der Bestimmungsgröße BG durch die Auswerteeinheit A fortgefahren werden.

Die Figur 2 zeigt eine Matrix zur Verwendung durch den Zähler Z. Dabei können in der Berechnungsmatrix verschiedene Bewertungen B_i mit ihren jeweiligen Gewichtungen G_i dargestellt sein. Die verschiedenen Bewertungen B_i können durch eine Priorisierung eine Reihenfolge erhalten, so dass die jeweils am höchste priorisierte aktive Bewertung B_i die Gewichtung zur Bestimmung der Bestimmungsgröße stellt.

Im Ausführungsbeispiel der Figur 2 sind verschiedene Zeilen dargestellt, in welchen jeweils die Bewertungen B_1, B_2, B_3, B_4 etc. dargestellt sind. Den Spalten sind die Lieferobjekte LO_i zugeordnet. In den Matrixfeldern sind die jeweiligen Gewichtungsfaktoren G_i eingetragen, mit welchen die Beiträge der jeweiligen Lieferobjekte gewichtet werden. In einer ersten Zeile der Bewertung B_1 ist beispielsweise das Lieferobjekt LO_1, also die Anfahrbewertung, mit 100% gewichtet und das Lieferobjekt LO_3 mit 50%. Die übrigen Lieferobjekte sind mit 0 gewichtet, so dass sie zur Bestimmung der Bestimmungsgröße bei der Bewertung B_1 keinen Beitrag leisten.

Wechselt nun die Bewertung, da die Bewertung B_1 deaktiviert wird, wird zur nächsten höchsten priorisierten Bewertung gewechselt, wie z.B. zur Bewertung B_2. Bei der Bewertung B_2 wird der Beitrag von dem Lieferobjekt LO_4 mit 20% gewichtet, und der Beitrag BE_5 von dem Lieferobjekt LO_5 mit 100%. Die übrigen Lieferobjekte LO_1 bzw, deren Beiträge BE_i werden mit O gewichtet.

Wird nun wieder die Bewertung B_2 deaktiviert, kann zur nächsten Bewertung gewechselt werden. Für den Fall, dass eine höher priorisierte Bewertung vom deaktivierten Zustand zum aktivierten Zustand wechseln würde, könnten auch gleich die entsprechenden Gewichtungen dieser Bewertung verwendet werden.

Vorteil der dargestellten Vorgehensweise ist die individuelle Gewichtung einzelner Beiträge durch entsprechende Gewichtungsfaktoren, die für unterschiedliche Bewertungen auch verschieden ausfallen können.

Auch ist es besonders vorteilhaft, dass unmittelbare Wechsel von Bewertungen durchgeführt werden können. Beispielsweise kann die Längsbeschleunigungsbewertung LO_3 bei einer Kurvenfahrt von der Querbeschleunigungsbewertung LO_4 überstimmt werden, so dass bei Erkennen einer Kurvenfahrt eine Bewertung für die Kurvenfahrt mit veränderten Gewichtungen aktiviert werden kann.

Die Figur 3 zeigt schematisch ein Kraftfahrzeug 1 mit einem Antriebsmotor 2 und einem Getriebe 3 als ansteuerbares Aggregat. Das Getriebe 3 kann dabei ein automatisches Getriebe beispielsweise mit Drehmomentwandler sein oder, wie in Figur 3 dargestellt, ein automatisiertes Schaltgetriebe mit ansteuerbarer Kupplung 4. Auch kann das Getriebe ein Doppelkupplungsgetriebe oder ein stufenlos einstellbares Getriebe sein.

Wie der Figur 3 weiter zu entnehmen ist, weist das Getriebe 3 eine Steuereinheit 7 mit Speicher- und Rechenmitteln 8 auf, welche zur Steuerung des Getriebes 3 unter anderem mit einem Lasthebel 11, einem von einem Fahrer bedienbaren Wählhebel 12, einer Motorsteuerungseinheit 5 und diversen Drehzahlsensoren zur Messung von motordrehzahl, der Getriebeeingängswellendrehzahl und der Getriebeausgangswellendrehzahl verbunden ist.

Die Betätigung des Getriebes 3 erfolgt über eine mit der Steuereinheit 7 verbundene elektrohydraulische Betätigungseinheit 6. Das von dem Getriebe 3 abgegebene Ausgangsmoment wird über eine Getriebeausgangswelle 9 an angetriebene Räder 10 abgegeben.

Der Steuereinheit 7 werden die Beiträge BE_i der Lieferobjekte LO_i zugeführt oder intern auf Basis von zur Verfügung gestellter Daten erzeugt, damit sie dem Zähler Z zugeführt werden können. Die Beiträge können dabei durch Sensoren erfasst werden oder von anderen Steuereinheiten bestimmt werden.

### Bezugszeichen

- 1: Fahrzeug
- 2: Antriebsmotor
- 3: Aggregat, wie Getriebe
- 4: Kupplung
- 5: Motorsteuerungseinheit
- 6: Betätigungseinheit
- 7: Steuereinheit
- 8: Speicher- und Rechenmittel
- 9: Getriebeausgangswelle
- 10: angetriebene Räder
- 11: Lasthebel
- 12: Wählhebel

- B_i: Bewertung i
- BG: Bestimmungsgröße
- BE_i: Beitrag des Lieferobjekts i
- LO_i: Lieferobjekt i
- Z: Zähler
- G_i: Gewichtung i
- A: Auswertemittel
- GBE_i: gewichteter Beitrag i

## Patentansprüche

1. Verfahren zur Steuerung eines ansteuerbaren Aggregats (3), insbesondere eines Getriebes eines Kraftfahrzeugs (1), wobei zur Bildung wenigstens einer Bestimmungsgröße (BG) unterschiedliche oder unterschiedlich viele Beiträge (BE_1, BE_2, BE_3, BE_4, BE_i) von Lieferobjekten (LO_1, LO_2, LO_3, LO_4, LO_i) berücksichtigt werden, wobei zumindest zwei unterschiedliche Lieferobjekte (LO_1) vorgesehen sind, mittels der jeweils ein Beitrag (BE_i) zur Ermittlung der Bestimmungsgröße (BG) ermittelt wird, und wobei ein Zähler (Z) vorgesehen ist, welchem die Beiträge (BE_1) aller Lieferobjekte (LO_1) zugeführt werden, wobei
- der Zähler (Z) jeden Beitrag (BE_i) mittels einer Gewichtung (G_i) bewertet und einem Auswertemittel (A) zuführt und dieses Auswertemittel (A) mittels der bewerteten Beiträgen (GBE_1) die Bestimmungsgröße (BG) ermittelt,
- der Zähler (Z) alle Lieferobjekte (LO_1) aufruft und diese ihre Beiträge (BE_i) an den Zähler (Z) weitergeben,
- verschiedene Bewertungen (B_i) mit unterschiedlichen Gewichtungen (G_i) mittels des Zählers (Z) durchführbar sind und
- die Gewichtung (G_i) der Beiträge (BE_i) prozentual derart erfolgt, dass, für zumindest einzelne Beiträge (BE_1), bei unterschiedlichen Bewertungen (B_i) unterschiedliche Gewichtungen (G_i) erfolgen.

2. Verfahren nach Anspruch 1, **dadurch gekennzeichnet, dass** die Bewertungen (B_i) während eines Verfahrensablaufs veränderbar oder wechselbar sind.

3. Verfahren nach Anspruch 1 oder 2, **dadurch gekennzeichnet, dass** die einzelnen Bewertungen (B_i) untereinander priorisierbar sind.

4. Verfahren nach Anspruch 1, 2 oder 3, **dadurch gekennzeichnet, dass** zumindest einzelne Bewertungen (B_i) abschaltbar sind.

5. Verfahren nach Anspruch 4, **dadurch gekennzeichnet, dass** im Falle einer Abschaltung der momentan am höchsten priorisierten Bewertung (B_i), die nach dem Abschalten am höchsten priorisierte nicht abgeschaltete Bewertung (B_i) zur Gewichtung (G_i) der Beiträge (BE_i) herangezogen wird.

6. Verfahren nach einem der Ansprüche 1 bis 5, **dadurch gekennzeichnet, dass** die Lieferobjekte (LO_1, LO_2, LO_3, LO_4, LO_i) Objekte sind, von welchen Bewertungen, Daten oder Signale zu einem aktuellen Fahrzeugparameter ermittelt oder erhalten werden.

7. Verfahren nach Anspruch 6, **dadurch gekennzeichnet, dass** der einem Lieferobjekt (LO_1, LO_2, LO_3, LO_4, LO_i) zugeordnete Fahrzeugparameter eine Größe wenigstens der folgenden Größen ist: Motordrehzahl, Motordrehmoment, Getriebedrehzahl, Getriebeeingangswellendrehzahl, Getriebeausgangswellendrehzahl, Raddrehzahl, Fahrzeuglängsgeschwindigkeit, Fahrzeugquergeschwindigkeit, Fahrzeuglängsbeschleunigung, Fahrzeugquerbeschleunigung, Lasthebelposition, Lasthebelbetätigungsgeschwindigkeit, Lasthebelbetätigungsbeschleunigung, Getriebewahlhebeleinstellung, Getriebemodus, Anfahrvorgang und Kick-down-Zustand.

8. Verfahren nach einem der vorhergehenden Ansprüche 1 bis 7, **dadurch gekennzeichnet, dass** die Beiträge (BE_1, BE_2, BE_3, BE_4, Bei) jeweils eine Kenngröße zu einem Fahrzeugparameter darstellen.

9. Verfahren nach einem der vorhergehenden Ansprüche 1 bis 8, **dadurch gekennzeichnet, dass** die Bestimmungsgröße (BG) ein Fahrertyp ist.

10. Steuereinheit (7) zur Steuerung eines ansteuerbaren Aggregats (3), insbesondere eines Getriebes (3) eines Kraftfahrzeuges (1), mit Speicher- und Rechenmitteln (8) zur Durchführung eines Verfahrens nach einem der Ansprüche 1 bis 9.

11. Aggregat (3), insbesondere Getriebe eines Kraftfahrzeuges, mit einer Steuereinheit (7) zur Durchführung eines Verfahrens nach einem der Ansprüche 1 bis 9.

## Claims

1. Method for controlling a controllable assembly (3), in particular a transmission of a motor vehicle (1), wherein in order to form at least one determining variable (BG), different contributions (BE_1, BE_2, BE_3, BE_4, BE_i), or different numbers of contributions (BE_1, BE_2, BE_3, BE_4, BE_i), of supplying items (LO_1, LO_2, LO_3, LO_4, LO_i) are taken into account, wherein at least two different supplying items (LO_i) are provided, which are each used to ascertain a contribution (BE_i) to acquiring the determining variable (BG), and wherein a counter (Z) is provided to which the contributions (BE_i) of all the supplying items (LO_i) are fed, wherein
- the counter (Z) evaluates each contribution (BE_i) by means of a weighting (G_i) and feeds it to an evaluation means (A), and this evaluation means (A) acquires the determining variable (BG) by means of the evaluated contributions (GBE_i),
- the counter (Z) retrieves all the supplying items (LO_i) and passes on their contributions (BE_i) to the counter (Z),
- various evaluations (B_i) can be carried out with different weightings (G_i) by means of the counter (Z), and
- the weighting (G_i) of the contributions (BE_i) is carried out on a percentage basis such that different weightings (G_i) are carried out for at least individual contributions (BE_i) during different evaluations (B_i).

2. Method according to Claim 1, **characterized in that** the evaluations (B_i) can be changed or replaced during a method sequence.

3. Method according to Claim 1 or 2, **characterized in that** the individual evaluations (B_i) can be prioritized with respect to one another.

4. Method according to Claim 1, 2 or 3, **characterized in that** at least individual evaluations (B_i) can be switched off.

5. Method according to Claim 4, **characterized in that** in the case of the evaluation (B_i) which currently has the highest priority being switched off, the evaluation (B_i) which is not switched off and which has the highest priority after the switching off process is used for the weighting (G_i) of the contributions (BE_i).

6. Method according to one of Claims 1 to 5, **characterized in that** the supplying items (LO_1, LO_2, LO_3, LO_4, LO_i) are objects from which evaluations, data or signals relating to a current vehicle parameter are acquired or obtained.

7. Method according to Claim 6, **characterized in that** the vehicle parameter which is assigned to a supplying item (LO_1, LO_2, LO_3, LO_4, LO_i) is one variable of at least the following variables: engine speed, engine torque, transmission speed, transmission input shaft speed, transmission output shaft speed, wheel speed, vehicle longitudinal speed, vehicle transverse speed, vehicle longitudinal acceleration, vehicle transverse acceleration, load lever position, load lever activation speed, load lever activation acceleration, transmission selector lever setting, transmission mode, starting process and kickdown state.

8. Method according to one of the preceding Claims 1 to 7, **characterized in that** the contributions (BE_1, BE_2, BE_3, BE_4, BE_i) each constitute a characteristic variable for a vehicle parameter.

9. Method according to one of the preceding Claims 1 to 8, **characterized in that** the determining variable (BG) is a type of driver.

10. Control unit (7) for controlling a controllable assembly (3), in particular a transmission (3) of a motor vehicle (1), having storage and computing means (8) for carrying out a method according to one of Claims 1 to 9.

11. Assembly (3), in particular transmission of a motor vehicle, having a control unit (7) for carrying out a method according to one of Claims 1 to 9.

## Revendications

1. Procédé de commande d'un ensemble asservi (3), en particulier de la transmission d'un véhicule automobile (1),
différentes contributions ou différents nombres de contributions (BE_1, BE_2, BE_3, BE_4, BE_i) d'objets livreurs (LO_1, LO_2, LO_3, LO_4, LO_i) étant pris en compte pour former au moins une grandeur de détermination (BG),
au moins deux objets livreurs différents (LO_i) étant prévus pour déterminer une contribution (BE_i) servant à déterminer la grandeur de détermination (BG),
un compteur (Z) auquel les contributions (BE_i) de tous les objets livreurs (LO_i) sont apportés étant prévu,
le compteur (Z) évaluant chaque contribution (BE_i) au moyen d'une pondération (G_i) et l'amenant à un moyen d'évaluation (A),
ce moyen d'évaluation (A) déterminant la grandeur de détermination (BG) au moyen des contributions (GBE_i) évaluées,
le compteur (Z) interrogeant tous les objets livreurs (LO_i) et ces derniers transmettant leur contribution (BE_i) au compteur (Z),
différentes évaluations (B_i) qui présentent différentes pondérations (B_i) pouvant être exécutées au moyen du compteur (Z) et
la pondération (B_i) des contributions (BE_i) s'effectuant en pourcentage de telle sorte que pour au moins certaines contributions (BE_i), des pondérations (B_i) différentes sont réalisées pour différentes évaluations (B_i).

2. Procédé selon la revendication 1, **caractérisé en ce que** les évaluations (B_i) peuvent être modifiées ou échangées pendant le déroulement du procédé.

3. Procédé selon les revendications 1 ou 2, **caractérisé en ce que** les différentes évaluations (B_i) peuvent être priorisées les unes par rapport aux autres.

4. Procédé selon les revendication 1, 2 ou 3, **caractérisé en ce qu'**au moins certaines évaluations (B_i) peuvent être débranchées.

5. Procédé selon la revendication 4, **caractérisé en ce qu'**en cas de débranchement de l'évaluation (B_i) en cours et ayant reçu la priorité la plus élevée, l'évaluation (B_i) de priorité la plus élevée non débranchée après le débranchement intervient dans la pondération (B_i) des contributions (BE_i).

6. Procédé selon l'une des revendications 1 à 5, **caractérisé en ce que** les objets livreurs (LO_1, LO_2, LO_3, LO_4, LO_i) sont des objets dont les évaluations, les données ou les signaux concernant un paramètre en cours du véhicule ont été déterminés ou obtenus.

7. Procédé selon la revendication 6, **caractérisé en ce que** le paramètre du véhicule associé à un objet livreur (LO_1, LO_2, LO_3, LO_4, LO_i) est une grandeur parmi au moins les grandeurs suivantes : vitesse de rotation du moteur, couple de rotation du moteur, vitesse de rotation de la transmission, vitesse de rotation de l'arbre d'entrée de la transmission, vitesse de rotation de l'arbre de sortie de la transmission, vitesse de rotation des roues, vitesse longitudinale du véhicule, vitesse transversale du véhicule, accélération longitudinale du véhicule, accélération transversale du véhicule, position du levier de charge, vitesse d'actionnement du levier de charge, accélération d'actionnement du levier de charge, réglage du levier de sélection de rapport de transmission, mode de transmission, opération de démarrage et situation d'enfoncement de la pédale d'accélérateur.

8. Procédé selon l'une des revendications 1 à 7 qui précèdent, **caractérisé en ce que** les contributions (BE_1, BE_2, BE_3, BE_4, BE_i) représentent chacune une grandeur caractéristique d'un paramètre du véhicule.

9. Procédé selon l'une des revendications 1 à 8 qui précèdent, **caractérisé en ce que** la grandeur de détermination (BG) est un type de conducteur.

10. Unité de commande (7) qui commande un ensemble asservi (3), en particulier la transmission (3) d'un véhicule automobile (1) et présentant des moyens de mémoire et de calcul (8) qui permettent de mettre en oeuvre un procédé selon l'une des revendications 1 à 9.

11. Ensemble (3), en particulier transmission d'un véhicule automobile, présentant une unité de commande permettant de mettre en oeuvre un procédé selon l'une des revendications 1 à 9.
